# EUROPEAN PATENT APPLICATION

(11) **EP 3 431 805 A1**
(43) Date of publication of application: **23.01.2019**
(21) Application number: 17766466.1
(22) Date of filing: 07.03.2017
(51) Int. Cl.: F16D 65/092, B61H 5/00

(54) **BRAKE LINING FOR RAILWAY VEHICLE AND DISC BRAKE FOR RAILWAY VEHICLE USING SAME**

(30) Priority: 17.03.2016 JP 2016054404; 27.01.2017 JP 2017012680
(71) Applicant: Nippon Steel & Sumitomo Metal Corporation, Tokyo 100-8071 (JP); Fine Sinter Co., Ltd., Kasugai-shi, Aichi 480-0303 (JP)
(72) Inventor: SAKAYAMA, Yuiko, Tokyo 100-8071 (JP); FUJIMOTO, Takahiro, Tokyo 100-8071 (JP); KATO, Takanori, Tokyo 100-8071 (JP); SAKAGUCHI, Atsushi, Tokyo 100-8071 (JP); ICHIKAWA, Yuki, Tokyo 100-8071 (JP); NAKANO, Takeshi, Kasugai-shi Aichi 480-0303 (JP); TAKAMI, Hajime, Kokubunji-shi Tokyo 185-8540 (JP); GUSHIMA, Kazuya, Kokubunji-shi Tokyo 185-8540 (JP)
(74) Representative: Zimmermann & Partner Patentanwälte mbB
(86) International application number: PCT/JP2017/009055
(87) International publication number: WO 2017/159465

(57) **Abstract**

A disclosed brake lining includes first and second friction member blocks (21 and 22), fastening members (31), spring members (32) disposed in the fastening members (31), and a base plate (41). Each of the first friction member blocks (21) including friction members (20) is elastically fastened to the base plate (41) by two of the fastening members (31) that pass through the spring member (32) and a first back plate (21a). The two of the fastening members (31) are disposed along a circumference of a circle centered around an axle. Each of the second friction member blocks (22) including friction members (20) is elastically fastened to the base plate (41) by three of the fastening members (31) that pass through the spring member (32) and a second back plate (22a). Two of the fastening members (31) lying on opposite ends of each of the second friction member blocks (22) are disposed along a circumference of a circle around the axle.

## Description

### TECHNICAL FIELD

The present invention relates to a brake lining for railway vehicles and a disk brake for railway vehicles including the brake lining.

### BACKGROUND ART

In recent years, as railway vehicles become faster, the use of disk brakes is increasing as braking devices for railway vehicles. Disk brakes are devices to create braking force by means of friction between a brake disk and a brake lining.

Patent Literature 1 (Japanese Patent Application Publication No. 2012-251597) discloses an example of a brake lining. Specifically, Patent Literature 1 discloses a brake lining in which every two of friction members adjacent to each other are paired, and a back plate for the pair of friction members is formed into a one-piece member. Patent Literature 1 describes that the brake lining enables "compatibility between equalization of a contact interfacial pressure between the brake lining and a brake disk during braking and stabilization of a coefficient of friction therebetween, as well as improvement of durability and reliability."

During braking using a disk brake, when a brake lining is pressed against a brake disk, the brake disk may vibrate to make noise called brake squeal. It is believed that the brake squeal is caused by self-induced vibration that occurs when a brake lining is pressed against a brake disk. To minimize the brake squeal, techniques have been disclosed.

Patent Literature 2 (Japanese Patent Application Publication No. 2011-214629) discloses a brake lining including friction members and a backing plate for supporting the friction members. These friction members are divided into a plurality of groups and disposed in a radius direction and in a circumferential direction of a brake disk. The friction members are supported by a backing plate with elastic members interposed therebetween. In the brake lining according to

Patent Literature 2, in a state where the brake lining is placed on a carriage, a support stiffness of the friction members in a vertical-direction center line H portion of the lining is set to be lower than that of the friction members in portions other than the center line H portion. Patent Literature 2 describes that this configuration reduces the brake squeal.

As braking is repeated using a disk brake, friction members of a brake lining wear. At this point, only some of the friction members can come into contact with the brake disk intensively, resulting in uneven wear. The uneven wear degrades brake performance and a lifetime of friction members. To prevent such uneven wear, it is preferable that a brake disk and a brake lining come into contact with each other evenly. In addition, there is a demand for a new method for minimizing brake squeal effectively.

### CITATION LIST

### PATENT LITERATURE

Patent Literature 1: Japanese Patent Application Publication No. 2012-251597
Patent Literature 2: Japanese Patent Application Publication No. 2011-214629

### SUMMARY OF INVENTION

### TECHNICAL PROBLEM

In such circumstances, one of objectives of the present invention is to provide a brake lining that enables minimizing brake squeal and uneven wear effectively, and provide a disk brake including the brake lining.

### SOLUTION TO PROBLEM

A brake lining according to an embodiment of the present invention is a brake lining for railway vehicles that is configured to be pressed by a brake caliper against a sliding surface of a brake disk rotating with an axle of wheels of a railway vehicle. The brake lining includes at least one first friction member block, at least one second friction member block, a plurality of fastening members, spring members respectively disposed for the plurality of fastening members, and a base plate to be attached to the brake caliper. Each of the at least one first friction member block includes at least one first friction member and a first back plate on which a back surface of each of the at least one first friction member is fixed. Each of the at least one first friction member block is elastically fastened to the base plate with two of the fastening members that pass through the spring members and the first back plate. The two of the fastening members included in each of the at least one first friction member block are disposed along a circumference of a circle around the axle. Each of the at least one second friction member block includes at least one second friction member and a second back plate on which a back surface of each of the at least one second friction member is fixed. Each of the at least one second friction member block is elastically fastened to the base plate with three of the fastening members that pass through the spring members and the second back plate. Two of the fastening members lying on opposite ends of each of the at least one second friction member block are disposed along a circumference of a circle around the axle.

A disk brake for railway vehicles according to an embodiment of the present invention includes a brake disk configured to rotate together with an axle of wheels of a railway vehicle, a brake caliper, and the brake lining according to the present invention attached to the brake caliper.

### ADVANTAGEOUS EFFECTS OF INVENTION

According to the present invention, it is possible to provide a brake lining that enables minimizing brake squeal and uneven wear effectively, and provide a disk brake including the brake lining.

### BRIEF DESCRIPTION OF DRAWINGS

FIG. 1 is a front view schematically illustrating an example of a brake lining according to the present invention.
FIG. 2 is a diagram schematically illustrating a cross section of a part of the brake lining illustrated in FIG. 1.
FIG. 3 is a diagram illustrating an example of a disposition of friction member blocks in the brake lining according to the present invention.
FIG. 4A is a front view of a brake lining in Embodiment 1.
FIG. 4B is a rear view of the brake lining in Embodiment 1.
FIG. 4C is a right side view of the brake lining in Embodiment 1.
FIG. 4D is a left side view of the brake lining in Embodiment 1.
FIG. 4E is a plan view of the brake lining in Embodiment 1.
FIG. 4F is a bottom view of the brake lining in Embodiment 1.
FIG. 4G is a perspective view of the brake lining in Embodiment 1.
FIG. 5A is a front view of a brake lining in Embodiment 2.
FIG. 5B is a rear view of the brake lining in Embodiment 2.
FIG. 5C is a right side view of the brake lining in Embodiment 2.
FIG. 5D is a left side view of the brake lining in Embodiment 2.
FIG. 5E is a plan view of the brake lining in Embodiment 2.
FIG. 5F is a bottom view of the brake lining in Embodiment 2.
FIG. 5G is a perspective view of the brake lining in Embodiment 2.
FIG. 6A is a front view of a brake lining in Embodiment 3.
FIG. 6B is a rear view of the brake lining in Embodiment 3.
FIG. 6C is a right side view of the brake lining in Embodiment 3.
FIG. 6D is a left side view of the brake lining in Embodiment 3.
FIG. 6E is a plan view of the brake lining in Embodiment 3.
FIG. 6F is a bottom view of the brake lining in Embodiment 3.
FIG. 6G is a perspective view of the brake lining in Embodiment 3.
FIG. 7A is a diagram schematically illustrating a disposition of friction member blocks in a brake lining in Inventive Example 1.
FIG. 7B is a diagram schematically illustrating a disposition of friction member blocks in a brake lining in Comparative Example 1.
FIG. 7C is a diagram schematically illustrating a disposition of friction member blocks in a brake lining in Comparative Example 2.
FIG. 8 is a graph illustrating results of evaluation on brake squeal in Examples.

### DESCRIPTION OF EMBODIMENTS

As a result of intensive studies, the inventors of the present application found that the above objective can be achieved by using a specific brake lining in which a plurality of fastening members are disposed in a specific configuration. The present invention is based on this new finding.

Hereafter, embodiments of the present invention will be described. The following description will be made about embodiments of the present invention by way of examples, but the present invention is not limited to the examples described below. Although specific numeric values and materials are exemplified in the following description in some cases, other numeric values and materials may apply as long as they allow the advantageous effects of the present invention to be obtained.

### (Brake Lining)

A brake lining for the present invention is a brake lining for railway vehicles. The brake lining is configured to be pressed by a brake caliper against a sliding surface of a brake disk rotating with an axle of wheels of a railway vehicle. The brake lining includes at least one first friction member block, at least one second friction member block, a plurality of fastening members, spring members respectively disposed for the plurality of fastening members, and a base plate to be attached to the brake caliper. The base plate may be attached directly to the brake caliper, or attached to the brake caliper with another member interposed therebetween. Numbers of first and second friction member blocks included in the brake lining do not have their limitations and each may be within a range of, for example, one to six.

Each of the at least one first friction member block includes at least one first friction member and a first back plate on which a back surface of each of the at least one first friction member is fixed. When each of the at least one first friction member block includes a plurality of first friction members, back surfaces of the friction members are fixed to one first back plate. Each of the at least one first friction member block is elastically fastened to the base plate with two of the fastening members that pass through the spring members and the first back plate. The two of the fastening members included in each of the at least one first friction member block are disposed along a circumference of a circle around the axle. In other words, each of the at least one first friction member block is disposed such that the two of the fastening members included in each of the at least one first friction member block are disposed along a circumference of a circle around the axle.

Each of the at least one second friction member block includes at least one second friction member and a second back plate on which a back surface of each of the at least one second friction member is fixed. When each of the at least one second friction member block includes a plurality of second friction members, back surfaces of the friction members are fixed to one second back plate. Each of the at least one second friction member block is elastically fastened to the base plate with three of the fastening members that pass through the spring members and the second back plate. In each of the at least one second friction member block, the three of the fastening members are usually disposed in a straight line (or a substantially straight line) with spaces. Two of the fastening members lying on opposite ends of each of the second friction member blocks are disposed along a circumference of a circle around the axle. In other words, each of the at least one second friction member block is disposed such that the two fastening members lying on opposite ends of each of the at least one second friction member block are disposed along a circumference of a circle around the axle.

The fastening members are not limited to particular fastening members, and rivets may be used. The spring members are not limited to particular spring members, and belleville washers, leaf springs, or coil springs may be used. The base plate is not limited to a particular base plate, and a metal plate may be used.

The first and second friction member blocks each include friction members that are disposed to face a sliding surface of the brake disk. The friction members (first and second friction members) are not limited to particular friction members, and known friction members may be used. Examples of a material of the friction members include copper-based sintered materials and resin-based materials. A planar shape of the friction members has no limitation. Examples of the planar shape of the friction members include circles, ellipses, and polygons (quadrilaterals, hexagons, etc.). The first and second friction members each may have a shape formed by coupling a plurality of friction members. For example, a first friction member may have a shape formed by coupling two friction members (friction members each in a disk shape or another kind of shape), and a second friction member may have shape formed by coupling three friction members (friction members each in a disk shape or another kind of shape). In a typical example of the brake lining according to the present invention, components including friction members are only the first friction member blocks and the second friction member blocks.

When a plurality of first friction member blocks are divided in one first friction member block, a planar shape of the first back plate is not limited to a particular planar shape. For example, in the first back plate, a portion corresponding to between adjacent friction members may be narrowed. In addition, in the first back plate, the portion corresponding to between adjacent friction members may be in a band shape having a constant width or may swell.

In each of the fastening members connecting the friction member blocks and the base plate, a spring member is disposed. The fastening members fasten the friction member blocks to the base plate in a movable manner. This configuration enables the friction member blocks to be elastically attached to the base plate. In this configuration, the friction members move with a surface of the brake disk, and thus unevenness in contact interfacial pressure between the brake disk and the brake lining can be suppressed.

From one viewpoint, the brake lining according to the present invention includes elastic fastening members configured to fasten the friction member blocks to the base plate elastically. The elastic fastening members each include a fastening member and a spring member. A first friction member block is elastically fastened to the base plate by two elastic fastening members, and a second friction member block is elastically fastened to the base plate by three elastic fastening members.

Circumferences of circles serving as references for dispositions of a plurality of friction member blocks, respectively, may be either the same or different from each other. For example, fastening members of a plurality of friction member blocks may be disposed along different circumferences of circles or may be disposed along one circumference of a circle.

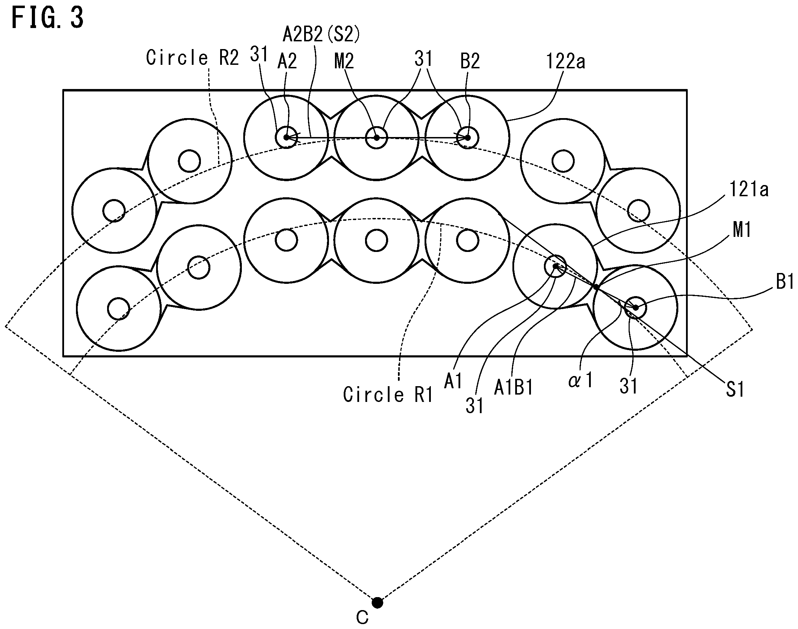

Here, description will be made about what "two fastening members are disposed along a circumference of a circle" means. Assume that a point A is a center of one of the two fastening members, a point B is a center of the other, a segment AB connects the point A and the point B, and a middle point M is a middle point of the segment AB. In addition, assume that a circle R is centered around a center C of an axle and passes the middle point M, and a tangential line S is a tangential line of the circle R at the middle point M. Then, assume that an angle α is an angle formed by the segment AB and the tangential line S (an acute angle if not 90°). Herein, "two fastening members are disposed along a circumference of a circle" means that the angle α falls within a range of 0 to 30° (e.g., a range of 0 to 20°, 0 to 10°, or 0 to 5°). An angle α being 0° means that the segment AB is parallel to the tangential line S. In a typical example, both of the point A and the point B are disposed along a circumference of a circle centered about the axle. In this case, the angle α is 0°. Specific examples of the angle α will be described with reference to FIG. 3.

At least one first friction member and at least one second friction member may be the same or different from each other. For example, all of the friction members included in the brake lining may be the same in material and shape. The first and second friction members are disposed to face the sliding surface of the brake disk. When at least one of the first and second friction member blocks includes a plurality of friction members, the plurality of friction members are disposed with spaces between each other.

The brake lining according to the present invention may have the following configurations (1) and (2), may have configurations (1) to (4), or may have configurations (1) to (5).
(1) The number of first friction members included in a first friction member block is two. The two first friction members are disposed with a space.
(2) The number of second friction members included in a second friction member block is three. The three second friction members are usually disposed in a straight line (or a substantially straight line) with spaces.
(3) The two first friction members included in the first friction member block each include a center portion in which the fastening member is disposed. If each of the friction members is not in a round shape, the center portion of the friction member means a position of a gravity center of its planar shape.
(4) The three second friction members included in the second friction member block each include a center portion in which the fastening member is disposed.
(5) The first and second friction members are friction members in a disk shape.

The first friction member block having the configuration (1) includes two friction members that are elastically fastened to the base plate and move independently. The second friction member block having the configuration (2) includes three friction members that are elastically fastened to the base plate and move independently. In the configurations (1) and (2), a plurality of friction members independently come into contact with the brake disk, and it is thus possible to minimize particularly unevenness in contact interfacial pressure between the brake disk and the brake lining during braking. According to the configurations (3) to (5), it is possible to prevent uneven wear of the friction members and to minimize influence of rotations of the friction members.

In an example of the brake lining according to the present invention (hereafter, may be referred to as an "example (A)"), at least one first friction member block and at least one second friction member block are disposed to have line symmetry with respect to a line, which is an axis of symmetry, in a radial direction of a circle centered about the axle (a line connecting a center of the base plate in a circumferential direction and a center of the axle). In other words, a disposition of the friction member blocks have bilateral symmetry (line symmetry) about a line, as an axis of symmetry, connecting a circumferential center of a region where all of the friction member blocks are disposed and the center of the axle. This configuration makes it easy to assemble the brake lining, reducing man-hours for the assembly. This configuration can further provide the same braking performance during forward and backward rotations of the wheels.

In the brake lining in the above example (A), a second friction member block may be disposed at a center, and first friction member blocks may be disposed to flank the second friction member block. For example, two second friction member blocks and four first friction member blocks that are disposed to flank the two second friction member blocks may be disposed to have line symmetry with respect to a line, which is an axis of symmetry, in the radial direction. In addition, in the brake lining in the above example (A), a first friction member block may be disposed at a center, and second friction member blocks may be disposed to flank the first friction member block. In addition, in the brake lining in the above example (A), a second friction member block may be disposed at a center on an outer side in the radial direction, and a first friction member block may be disposed at a center on an inner side in the radial direction. In this case, two first friction member blocks may be disposed to flank the above second friction member block on outer side, and two first friction member blocks may be disposed to flank the first friction member block on the inner side.

### (Disk Brake)

A disk brake according to the present invention is a disk brake for railway vehicles. The disk brake includes a brake disk configured to rotate together with an axle of wheels of a railway vehicle, a brake caliper, and the brake lining according to the present invention attached to the brake caliper. The brake caliper and the brake disk are not limited to particular brake caliper and brake disk, and known brake caliper and brake disk may be used. The brake caliper is configured to press the brake lining against the brake disk with oil pressure, air pressure, or the like, so as to apply brakes to the wheels. The brake disk is a disk configured to rotate together with rotation of the axle of the wheels of the railway vehicle. The brake disk is usually fixed to a wheel or the axle. A center of the brake disk matches a center of the axle. Therefore, "a circumference of a circle centered around an axle of wheels" can be herein translated into "a circumference of a circle centered about a center of the brake disk".

### (Embodiment)

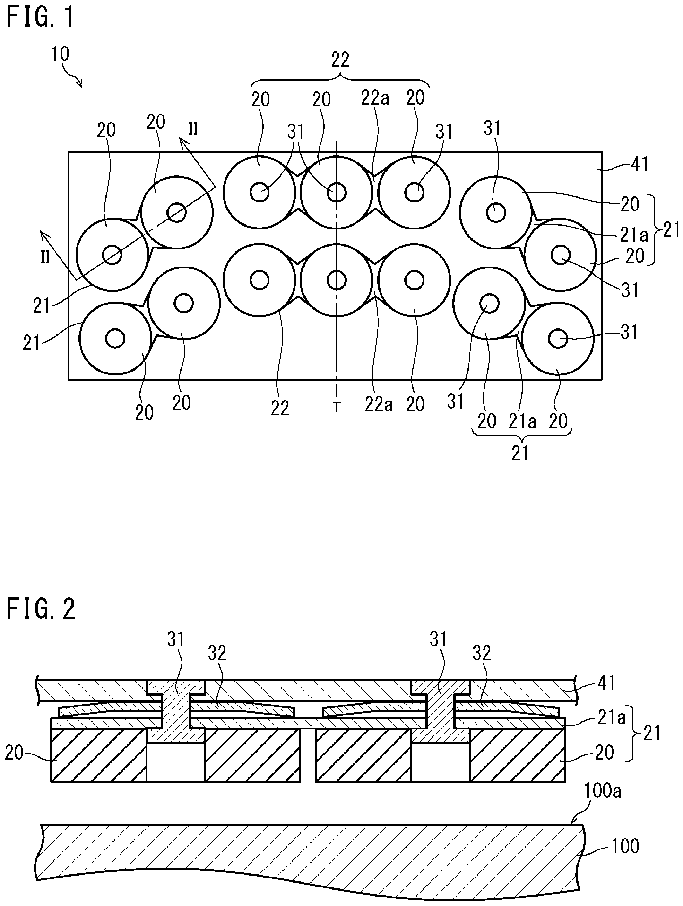

Hereafter, an embodiment of the present invention will be described. In the present embodiment, description will be made about an example in which a first friction member block includes two friction members, and a second friction member block includes three friction members. A brake lining 10 according to the present embodiment is illustrated in FIG. 1. FIG. 1 is a front view of the brake lining 10 as viewed from a brake disk side. A cross-sectional view of a first friction member block 21 taken along a line II-II of FIG. 1 is schematically illustrated in FIG. 2. FIG. 2 illustrates a disposition of a brake disk 100.

The brake lining 10 includes four first friction member block 21, two second friction member block 22, a plurality of fastening members (rivets) 31, a plurality of spring members (belleville washers) 32, and one base plate 41. A shape of the base plate 41 is a rectangle that is substantially long sideways.

The first friction member blocks 21 each include two disk-shaped friction members (first friction members) 20 and one back plate 21a. The two friction members 20 each include a back face that is fixed to the back plate 21a. The back plate 21a includes two through holes through which the fastening members 31 pass. In the back plate 21a, a portion corresponding to between adjacent friction members 20 is narrowed. In a center portion of each friction member 20, a fastening member 31 is disposed, the fastening member 31 passing the through hole of the back plate 21a and a spring member 32. The first friction member block 21 is not fixed to the fastening members 31, and the friction member block 21 is elastically fastened to the base plate 41 by the fastening members 31 and the spring member 32.

The second friction member block 22 includes three disk-shaped friction members (second friction members) 20 and one back plate 22a. In the present embodiment, description will be made about an example in which the friction members 20 included in the second friction member block 22 are the same as the friction members 20 included in the first friction member block 21. In the friction member block 22, the three friction members 20 are disposed on a straight line at regular intervals. Similarly, three fastening members 31 are disposed on a straight line at regular intervals. The back plate 22a includes three through holes through which the fastening members 31 pass. In the back plate 22a, portions corresponding to between adjacent friction members 20 are narrowed. In a center portion of each friction member 20, a fastening member 31 is disposed, the fastening member 31 passing through the through hole of the back plate 22a and a spring member 32. The second friction member block 22 is not fixed to the fastening members 31, and the friction member block 22 is elastically fastened to the base plate 41 by the fastening members 31 and the spring member 32. Use of the second friction member block 22 elastically fastened to the base plate with the three fastening members 31 enables minimizing brake squeal in particular.

As illustrated in FIG. 1 and FIG. 2, the friction members 20 are disposed with spaces between each other. The friction members 20 are disposed to face a sliding surface 100a of a brake disk 100. In an example, the base plate 41 of the brake lining 10 is attached to a brake caliper (not illustrated) with a guide plate (not illustrated). The brake disk according to the present invention includes the brake lining 10, the brake caliper, and the brake disk 100. In the brake lining 10 illustrated in FIG. 1, two second friction member blocks 22 are disposed in its center, and four first friction member blocks 21 are disposed to flank the second friction member blocks 22. The four friction member blocks 21 and the two friction member blocks 22 are disposed symmetrically (line symmetry) about a line T, as an axis of symmetry, in a radial direction of a circle around an axle of wheels.

An example of a disposition of friction member blocks is illustrated in FIG. 3. In the example of FIG. 3, a first friction member block 121a being the first friction member block is disposed to slightly incline from a circumference of a circle around the axle. A second friction member block 122a being the second friction member block is disposed such that the angle α described above is 0°.

A disposition of the first friction member block 121a will be described. Of two fastening members 31 of the first friction member block 121a, a center of one fastening member 31 is denoted by a point A1, and a center of the other is denoted by a point B1. A middle point of a segment A1B1, which connects the point A1 and the point B1, is denoted by a middle point M1. A circle that is centered around a center C of the axle and passes the middle point M1 is denoted by circle R1. Furthermore, a tangential line of the circle R1 at the middle point M1 is denoted by a tangential line S1. The segment A1B1 and the tangential line S1 make an angle α1, which is the angle α described above. The angle α1 (angle α) falls within the range described above. When the point A1 and the point B1 both lie on a circumference of a circle around the axle, the angle α1 is 0°. In the present embodiment, a center of a fastening member 31 is the same as a center of a friction member 20. Accordingly, the brake lining 10 according to the present embodiment has the above configurations (1) to (5).

The second friction member block 122a illustrated in FIG. 3 is disposed such that the angle α is 0°. Of three fastening members 31 of the second friction member block 122a, a center of one of two fastening members 31 lying on opposite ends is denoted by a point A2, and a center of the other is denoted by B2. A middle point of a segment A2B2, which connects the point A2 and the point B2, is denoted by a middle point M2. A circle that is centered around a center C of the axle and passes the middle point M2 is denoted by circle R2. Furthermore, a tangential line of the circle R2 at the middle point M2 is denoted by a tangential line S2. In the example illustrated by FIG. 3, the segment A2B2 matches the tangential line S2. The angle α described above is therefore 0°.

### (Other Embodiments)

Brake linings according to other Embodiments 1 to 3 will be described below.

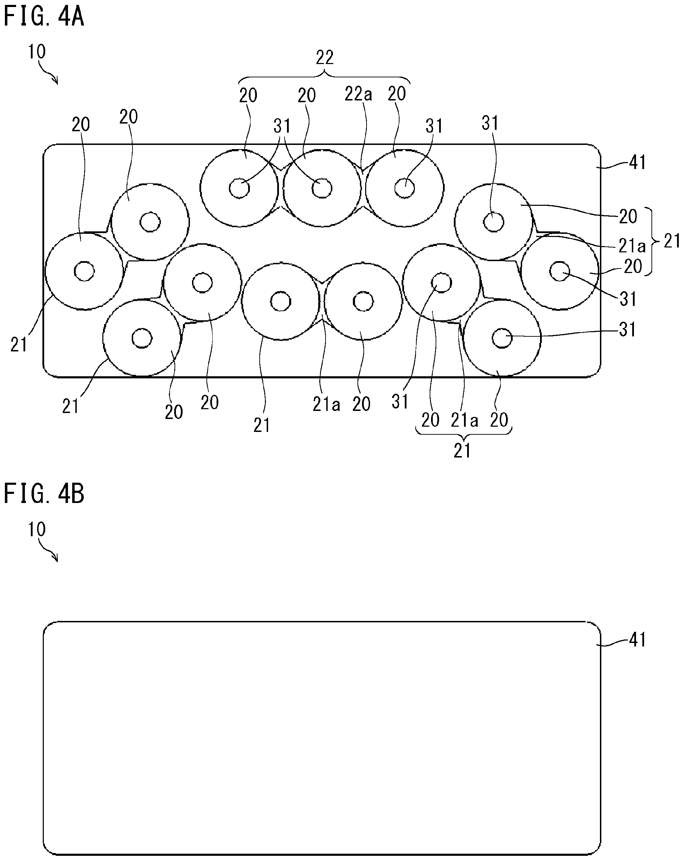

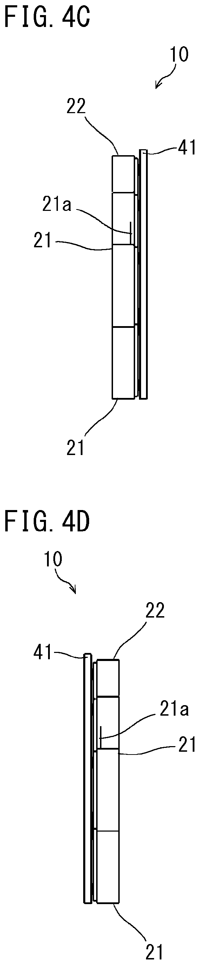

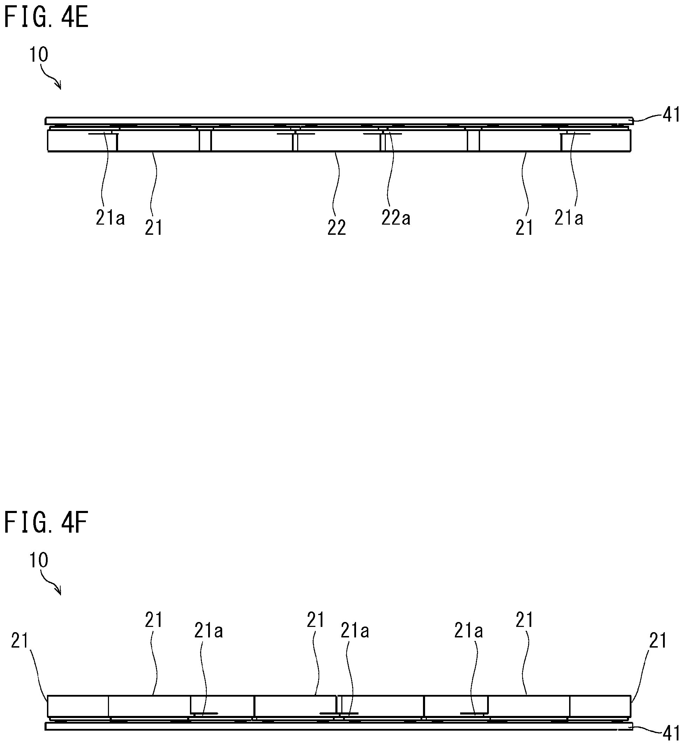

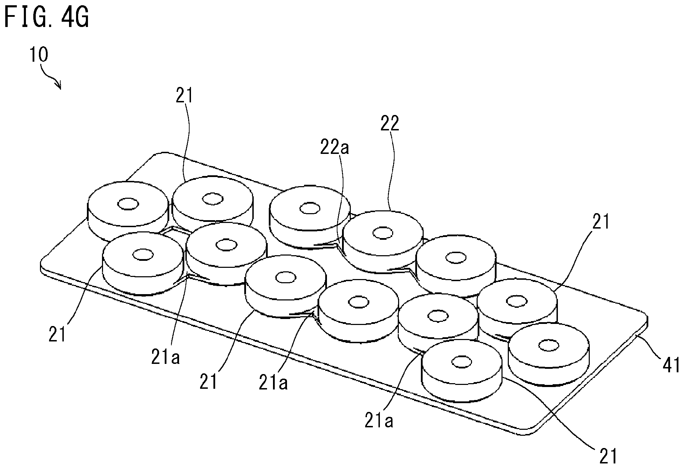

A brake lining 10 according to Embodiment 1 is illustrated in FIGS. 4A to 4G. FIG. 4A is a front view of the brake lining 10 as viewed from a brake disk side. FIG. 4B is a rear view. FIG. 4C is a right side view. FIG. 4D is a left side view. FIG. 4E is a plan view. FIG. 4F is a bottom view. FIG. 4G is a perspective view of the brake lining 10 as viewed obliquely from a brake disk side.

The brake lining 10 according to Embodiment 1 differs from the brake lining 10 illustrated in FIGS. 1 and 2 in the following points. Referring to FIGS. 4A to 4G, the brake lining 10 includes five first friction member blocks 21 and one second friction member block 22.

In the brake lining 10 according to Embodiment 1, one of the first friction member blocks 21 and the one second friction member block 22 are disposed in its center. The one second friction member block 22 is disposed on an outer side in a radial direction of a circle around an axle of wheels. The one of the first friction member blocks 21 is disposed on an inner side in the radial direction. Two of the first friction member blocks 21 are disposed to flank the one second friction member block 22 on the outer side. Two of the first friction member blocks 21 are disposed to flank the one first friction member block 21 on the inner side. The five friction member blocks 21 and the one friction member block 22 are disposed symmetrically (line symmetry) about a line T in the radial direction as an axis of symmetry.

In a back plate 21a of each first friction member block 21, a portion corresponding to between adjacent friction members 20 is narrowed to have a width smaller than that of the friction members 20. In a back plate 22a of the second friction member block 22, portions corresponding to between adjacent friction members 20 are narrowed to have a width smaller than that of the friction members 20.

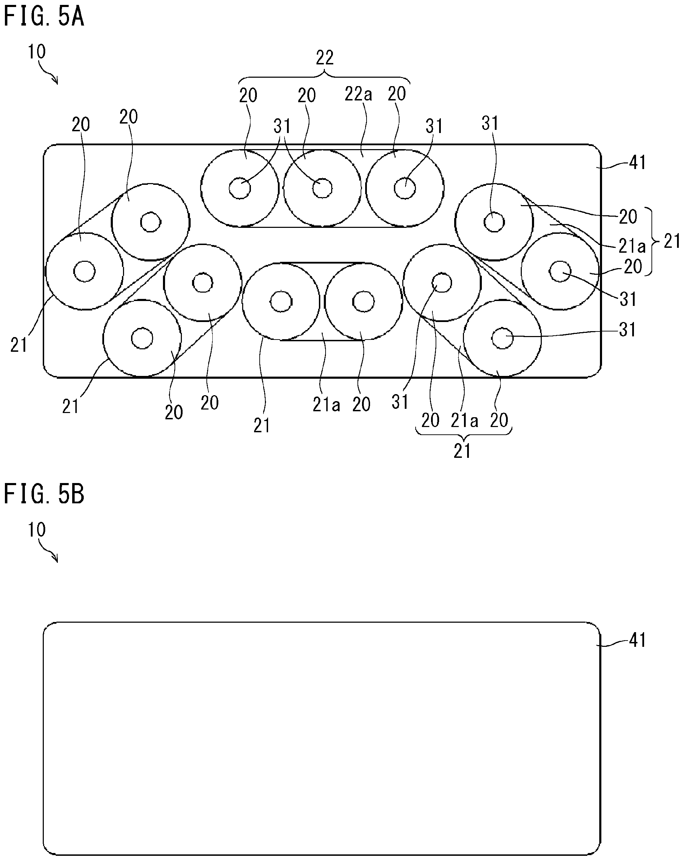

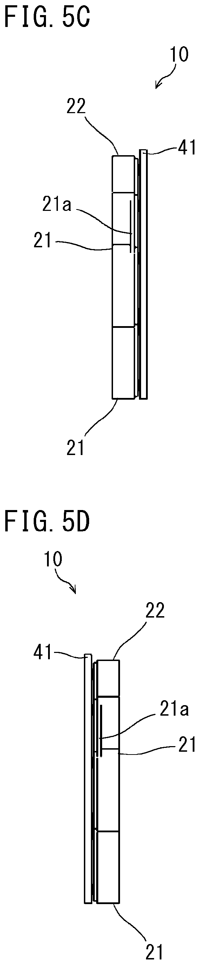

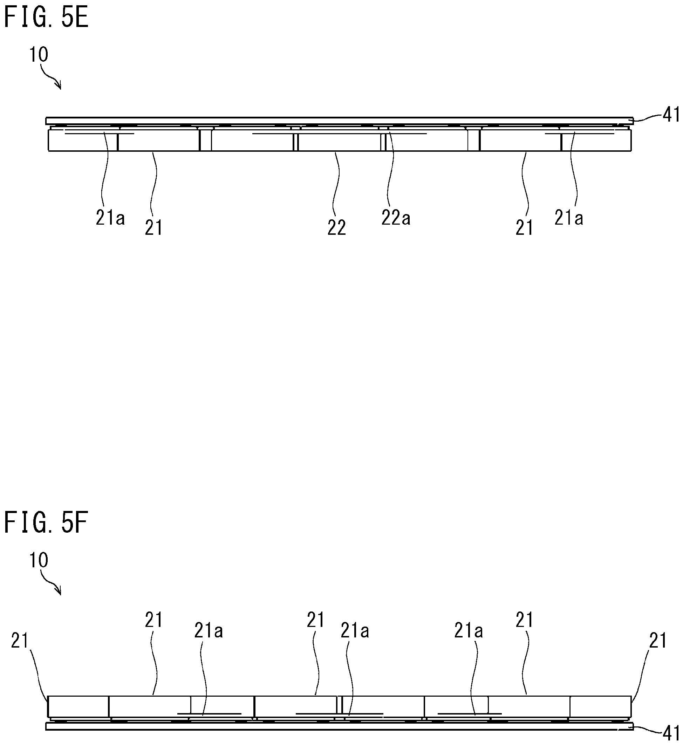

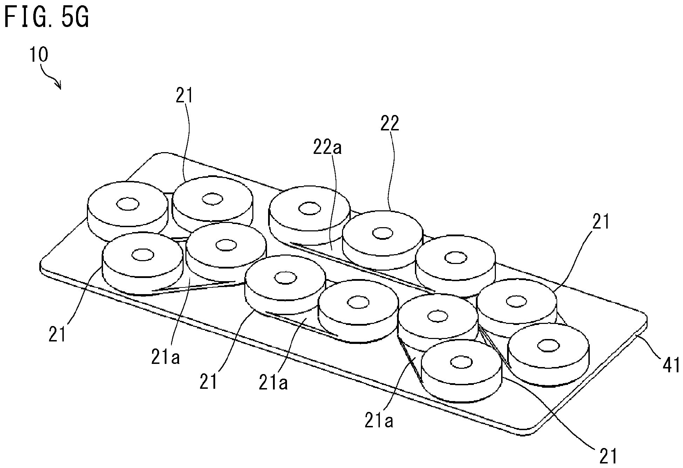

A brake lining 10 according to Embodiment 2 is illustrated in FIGS. 5A to 5G. FIG. 5A is a front view of the brake lining 10 as viewed from a brake disk side. FIG. 5B is a rear view. FIG. 5C is a right side view. FIG. 5D is a left side view. FIG. 5E is a plan view. FIG. 5F is a bottom view. FIG. 5G is a perspective view of the brake lining 10 as viewed obliquely from a brake disk side.

The brake lining 10 according to Embodiment 2 differs from the brake lining 10 according to Embodiment 1 illustrated in FIGS. 4A to 4G in the following points. Referring to FIGS. 5A to 5G, in a back plate 21a of each first friction member block 21, a portion corresponding to between adjacent friction members 20 is in a band shape having the same constant width as a width of the friction members 20. In a back plate 22a of the second friction member block 22, portions corresponding to between adjacent friction members 20 are each in a band shape having the same width as a width of the friction members 20.

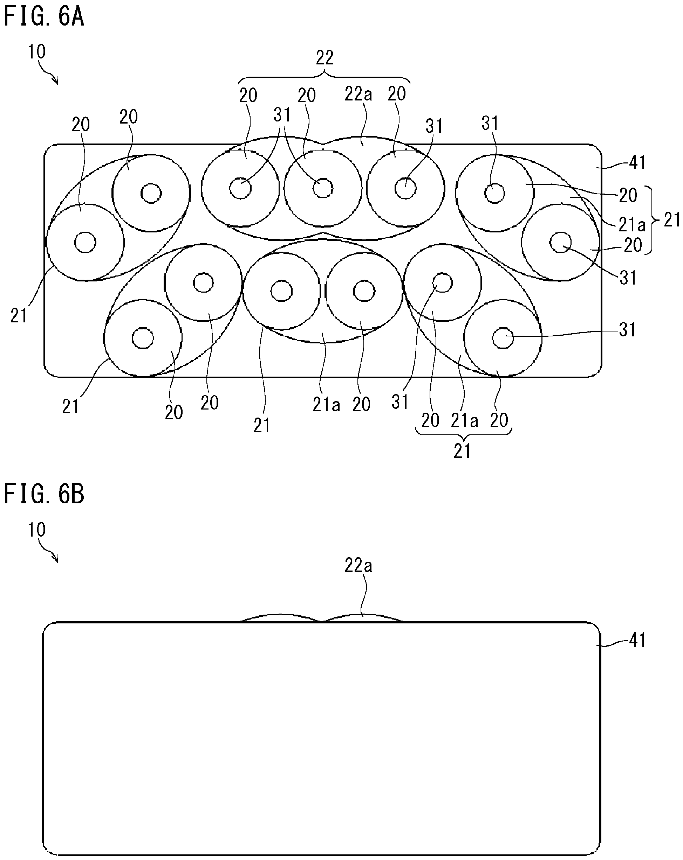

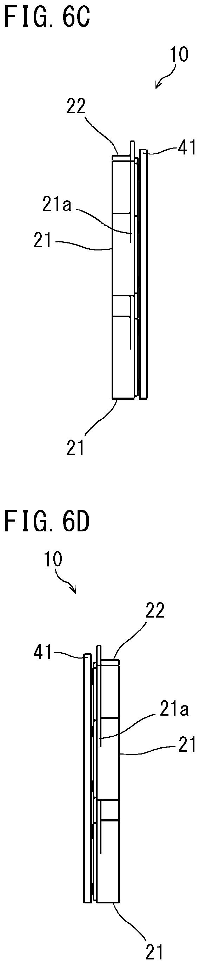

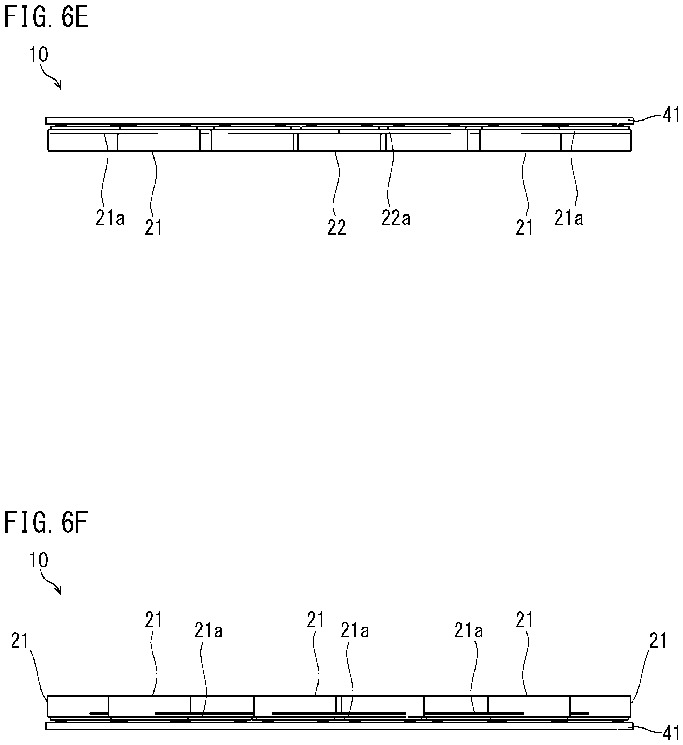

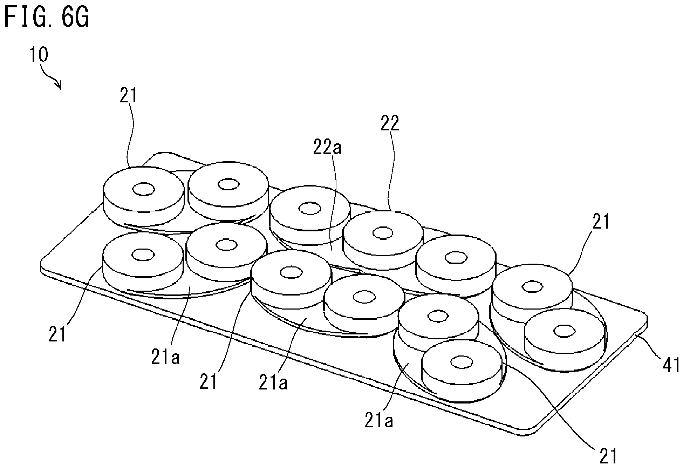

A brake lining 10 according to Embodiment 3 is illustrated in FIGS. 6A to 6G. FIG. 6A is a front view of the brake lining 10 as viewed from a brake disk side. FIG. 6B is a rear view. FIG. 6C is a right side view. FIG. 6D is a left side view. FIG. 6E is a plan view. FIG. 6F is a bottom view. FIG. 6G is a perspective view of the brake lining 10 as viewed obliquely from a brake disk side.

The brake lining 10 according to Embodiment 3 differs from the brake lining 10 according to Embodiment 1 illustrated in FIGS. 4A to 4G in the following points. Referring to FIGS. 6A to 6G, in a back plate 21a of each first friction member block 21, a portion corresponding to between adjacent friction member 20 swells out to have a width larger than that of the friction members 20. In a back plate 22a of the second friction member block 22, portions corresponding to between adjacent friction members 20 swell out to have a width larger than that of the friction members 20.

### EXAMPLES

The present invention will be described more in detail by way of Examples. In the following example, brake linings in the present invention and Comparative Example were evaluated by the finite-element analysis. In the analysis, a disk brake used in the Shinkansen (R), Japanese Bullet Train, was modeled on.

The analysis was conducted on three states of a brake disk: a new disk, a disk having a warped shape, and a disk having undergone heat deformation. The new disk refers to a disk that has a flat sliding surface. The disk having a warped shape refers to a disk in which an outer circumferential portion is warped toward a brake lining side due to repeated application of a braking load. The disk having undergone heat deformation refers to a disk that mimics a state in which a region in a center portion of the disk swells toward the brake lining side during braking.

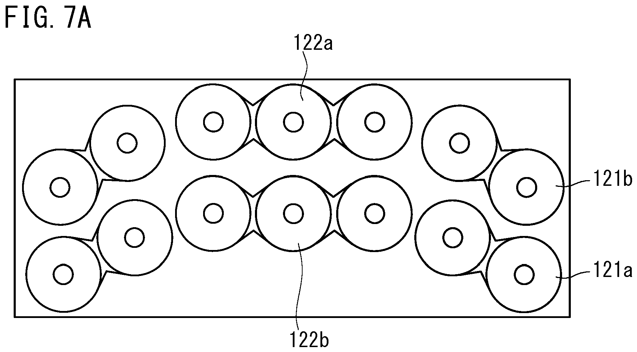

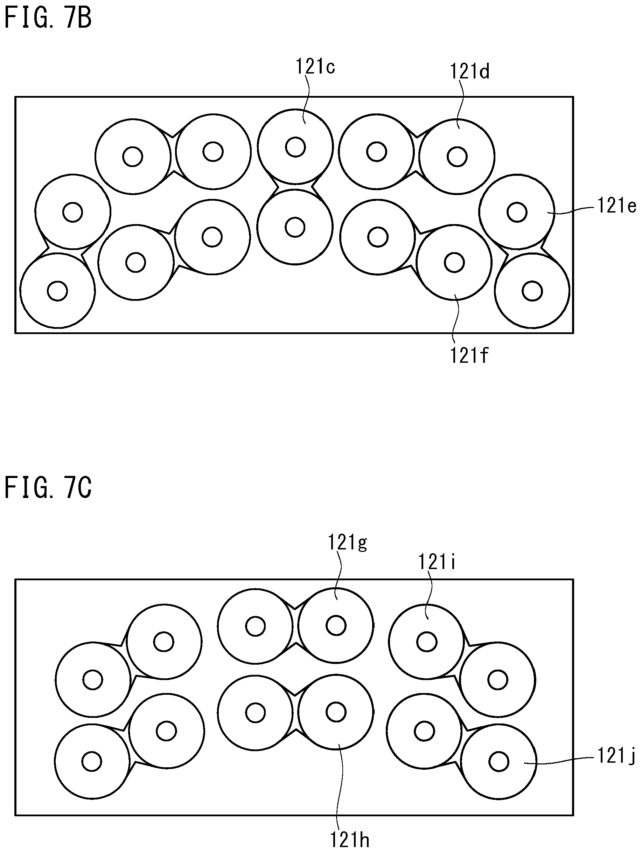

FIGS. 7A, 7B, and 7C illustrate dispositions of friction member blocks in brake linings in Inventive Example 1, Comparative Example 1, and Comparative Example 2, respectively. In each of the brake linings in Inventive Example, and Comparative Examples illustrated in FIGS. 7A to 7C, friction member blocks (first friction member blocks and second friction member blocks) are disposed to have line symmetry with respect to a line in the radial direction. The first and second friction member blocks have the configurations of the first and second friction member blocks described in Embodiment described above. Inventive Example and Comparative Examples are the same except that the number and disposition of the friction member blocks are different therebetween.

As illustrated in FIG. 7A, the brake lining in Inventive Example 1 includes four first friction member blocks (friction member blocks 121a and 121b, and their symmetric counterparts) and two second friction member blocks (friction member blocks 122a and 122b). In the friction member blocks 122a and 122b, the angles α were set at 0°. In the friction member blocks 121a and 121b, the angles α were set at 2.5° and 8.3°, respectively. In other words, the angles α in Inventive Example 1 were set to fall within a range of 0 to 30° (more in detail, a range of 0 to 10°).

As illustrated in FIG. 7B, the brake lining 10 in Comparative Example 1 includes seven first friction member blocks (a friction member block 121c, and friction member blocks 121d to 121f and their symmetric counterparts). In the friction member blocks 121c, 121d, 121e, and 121f, the angles α were set at 90°, 11.1°, 47°, and 0.2°, respectively.

As illustrated in FIG. 7C, the brake lining in Comparative Example 2 includes six first friction member blocks (friction member blocks 121g and 121h, and friction member blocks 121i and 121j and their symmetric counterparts). In the friction member blocks 121g, 121h, 121i, and 121j, the angles α were set at 0°, 0°, 1.6°, and 2.1°, respectively.

Total numbers of friction members (total number of fastening members) included in Inventive Example 1, Comparative Example 1, and Comparative Example 2 were set at 14, 14, and 12, respectively. In addition, a sliding area of the friction members (sums of areas of surfaces of the friction members on a brake disk side) included in Inventive Example 1, Comparative Example 1, and Comparative Example 2 were set at 27552 mm², 27552 mm², and 23616 mm², respectively.

In the analysis, a given load was applied to each of the brake linings by a brake caliper from a rear side of the brake lining. Specifically, a load of 13.65 kN was applied in a case of the new disk, 6.8 kN in a case of the disk having a warped shape, and 6.2 kN in the disk having undergone heat deformation. The brake squeal under the loads was evaluated. In addition, contact areas (sums of contact areas between the brake disk and the friction members) and maximum contact interfacial pressures under the loads were evaluated.

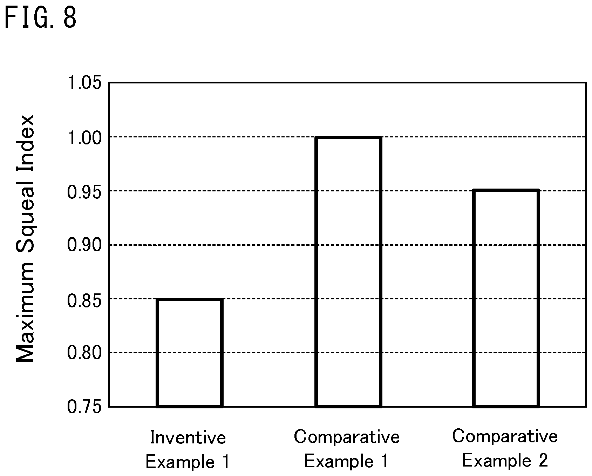

Results of the evaluation about the brake squeal are shown in FIG. 8. In a graph of FIG. 8, an ordinate represents maximum squeal index. A squeal index is a ratio to a damped ratio of self-induced vibration occurring in an analytic model of Comparative Example 1, which is assumed to be 1. As is clear from FIG. 8, as compared with the brake lining in Comparative Example 1 in which the friction member blocks are disposed not along the circumference, the brake linings in Inventive Example 1 and Comparative Example 2 in which the friction member blocks are disposed along the circumference exhibited reduced brake squeals. In particular, the brake lining in Inventive Example 1, in which the first friction member blocks 21 and the second friction member blocks 22 are mixed, exhibited an extremely high minimizing effect of brake squeal. In the graph of FIG. 8, a decrease of 0.1 in squeal index is translated into a decrease of 50% in sound pressure. Therefore, the results shown in FIG. 8 indicate that the brake lining in Inventive Example 1 can provide an extremely high minimizing effect of brake squeal.

Results of the analysis about contact areas between the brake disk and the friction members are shown in Table 1. In addition, results of the analysis about maximum contact interfacial pressures between the brake disk and the friction members are shown in Table 2. A large contact area means an even contact between the brake disk and the friction members, that is, a less uneven wear of the friction members. Similarly, a small maximum contact interfacial pressure means a less uneven wear of the friction members.

### [Table 1]

**TABLE 1**

| | Contact area of new disc | | Contact area of disc having warped shape | | Contact area of disc having undergone heat deformation | |
|---|---|---|---|---|---|---|
| | Area [mm²] | Ratio to Comparative Example 1 | Area [mm²] | Ratio to Comparative Example 1 | Area [mm²] | Ratio to Comparative Example 1 |
| Inventive Example 1 | 21172 | 1.01 | 11111 | 1.05 | 1366 | 1.01 |
| Comparative Example 1 | 21024 | 1.00 | 10590 | 1.00 | 1353 | 1.00 |
| Comparative Example 2 | 18066 | 0.86 | 10153 | 0.96 | 1209 | 0.89 |

### [Table 2]

**TABLE 2**

| | Maximum contact interfacial pressure of new disc [MPa] | Maximum contact interfacial pressure of disc having warped shape [MPa] | Maximum contact interfacial pressure of disc having undergone heat deformation [MPa] |
|---|---|---|---|
| Inventive Example 1 | 2.47 | 2.69 | 18.5 |
| Comparative Example 1 | 2.60 | 2.69 | 20.7 |
| Comparative Example 2 | 2.92 | 3.00 | 19.2 |

In Table 1, a difference in the contact area of the new disk between Inventive Example 1 and Comparative Example 1 is due to a relation between a position at which the new disk is pressed by a piston of the brake caliper and the disposition of the friction members. As shown in Table 1, the contact area of the brake lining in Inventive Example 1 was 1 to 5% larger than that of the brake lining in Comparative Example 1, which included the same number of friction members. In addition, the brake lining in Inventive Example 1 showed a maximum contact interfacial pressure lower than that of the brake linings in Comparative Examples 1 and 2. The results indicate that use of the brake lining in Inventive Example 1 enables minimizing the uneven wear of friction members.

As illustrated in FIG. 8, to minimize the brake squeal, it is important to dispose the friction member blocks along the circumference. In the brake lining in Comparative Example 2, the first friction member blocks 21 are disposed along the circumference, but it is difficult to dispose 14 friction members by using only the first friction member blocks 21 because of limitation on size. Meanwhile, to increase the contact area by using only the first friction member blocks 21, the disposition as in Comparative Example 1 is needed. However, the disposition of Comparative Example 1 makes a loud brake squeal, as illustrated in FIG. 8. In contrast, the brake lining in Inventive Example 1, in which the friction member blocks 21 and the friction member blocks 22 are combined, enables minimizing the brake squeal and minimizing the uneven wear to be achieved at the same time.

### INDUSTRIAL APPLICABILITY

The present invention is available for a brake lining for railway vehicles and a disk brake for railway vehicles including the brake lining.

### REFERENCE SIGNS LIST

10 brake lining
20 friction member (first and second friction members)
21, 121a to 121j first friction member block
21a first back plate
22, 122a, 122b second friction member block
22a second back plate
31 fastening member (rivet)
32 spring member (belleville washer)
41 baseplate
100 brake disk
100a sliding surface

## Claims

1. A brake lining for railway vehicles that is configured to be pressed by a brake caliper against a sliding surface of a brake disk rotating with an axle of wheels of a railway vehicle, the brake lining comprising:
at least one first friction member block;
at least one second friction member block;
a plurality of fastening members; spring members respectively disposed for the plurality of fastening members; and
a base plate to be attached to the brake caliper, wherein
each of the at least one first friction member block includes at least one first friction member and a first back plate on which a back surface of the at least one first friction member is fixed,
each of the at least one first friction member block is elastically fastened to the base plate with two of the fastening members that pass through the spring members and the first back plate,
the two of the fastening members included in each of the at least one first friction member block are disposed along a circumference of a circle around the axle,
each of the at least one second friction member block includes at least one second friction member and a second back plate on which a back surface of each of the at least one second friction member is fixed,
each of the at least one second friction member block is elastically fastened to the base plate with three of the fastening members that pass through the spring members and the second back plate, and
two of the fastening members lying on opposite ends of each of the at least one second friction member block are disposed along a circumference of a circle around the axle.

2. The brake lining according to claim 1, wherein the at least one first friction member is the same friction member as the at least one second friction member.

3. The brake lining according to claim 1 or 2, wherein
the number of the at least one first friction member included in each of the at least one first friction member block is two,
the number of the at least one second friction member included in each of the at least one second friction member block is three,
the two first friction members included in each of the at least one first friction member block each include a center portion in which the fastening member is disposed, and
the three second friction members included in each of the at least one second friction member block each include a center portion in which the fastening member is disposed.

4. The brake lining according to any one of claims 1 to 3, wherein the at least one first friction member block and the at least one second friction member block are disposed to have a line symmetry with respect to a line, which is an axis of symmetry, in a radial direction of a circle centered about the axle.

5. The brake lining according to claim 4, wherein two of the second friction member blocks and four of the first friction member blocks disposed to flank the two second friction member blocks are disposed to have a line symmetry with respect to a line, which is an axis of symmetry, in the radial direction.

6. The brake lining according to claim 4, wherein one of the second friction member blocks is disposed at a center on an outer side in the radial direction, one of the first friction member blocks is disposed at a center on an inner side in the radial direction, and two of the first friction member blocks are disposed to flank the one second friction member block on the outer side, and two of the first friction member blocks are disposed to flank the one first friction member block on the inner side.

7. A disk brake for railway vehicles, the disk brake comprising:
a brake disk configured to rotate together with an axle of wheels of a railway vehicle;
a brake caliper; and
the brake lining according to any one of claims 1 to 6 attached to the brake caliper.
